# EUROPEAN PATENT SPECIFICATION

(11) **EP 2 048 206 B1**
(45) Date of publication and mention of the grant of the patent: **20.11.2013**
(21) Application number: 07791553.6
(22) Date of filing: 30.07.2007
(51) Int. Cl.: C09D 17/00, B41J 2/01, B41M 5/00, C09D 11/00, C09B 67/46, C09B 67/36, C09B 67/04

(54) **PROCESS FOR PRODUCING AQUEOUS PIGMENT DISPERSION AND INK FOR INK-JET RECORDING**
VERFAHREN ZUR HERSTELLUNG EINER WÄSSRIGEN PIGMENTDISPERSION SOWIE TINTE FÜR DEN FARBSTRAHLDRUCK
PROCÉDÉ DE PRODUCTION D'UNE DISPERSION AQUEUSE DE PIGMENT ET ENCRE POUR UNE IMPRESSION À JET D'ENCRE

(30) Priority: 31.07.2006 JP 2006207981
(43) Date of publication of application: 15.04.2009
(73) Proprietor: DIC Corporation, Tokyo 174-8520 (JP)
(72) Inventor: INOUE, Sadahiro, Kitaadachi-gun Saitama 362-8577 (JP); HARADA, Hiroshi, Kitaadachi-gun Saitama 362-8577 (JP)
(74) Representative: Albrecht, Thomas
(86) International application number: PCT/JP2007/064868
(87) International publication number: WO 2008/015998

(56) References cited:
- JP-A- 11 199 811
- JP-A- 2001 010 033
- JP-A- 2006 077 201
- JP-A- 2006 096 777
- US-A1- 2002 075 369

## Description

### TECHNICAL FIELD

The present invention relates to a production process that yields an aqueous pigment liquid dispersion which contains a pigment, a resin, a wetting agent and a basic compound, and is ideal for preparing an ink-jet recording ink.

### BACKGROUND ART

In the fields of printing inks and coating materials, consideration of the need to move towards more environmentally friendly products has resulted in widespread investigation and application of materials in which the main raw material organic solvents have been replaced with water, namely a shift to aqueous materials. In this shift to aqueous materials, techniques for dispersing a pigment within a water-based medium, and then stably maintaining that dispersion over an extended period of time are extremely important. A variety of different dispersants and dispersion processes have been proposed for achieving this type of stable pigment dispersion solution.
Particularly in the case of inks used within ink-jet recording, the required quality levels, including the fineness of the dispersed particle size and the fact that the dispersed state must be able to be maintained for extended periods under all manner of environmental conditions, are extremely demanding, and achieving these levels of quality is extremely difficult. Usually, a stable pigment dispersion solution is ideally achieved by conducting the dispersion using the dispersant that is most suitable for the pigment being used. Printers used for aqueous ink-jet recording have a nozzle capping mechanism to prevent nozzle clogging caused by evaporation of the water contained in ink. Amongst such printers, mechanisms that employ a single cap unit to protect a plurality of nozzles of different colors are frequently applied, and in many printers, avoiding contact between different inks within the cap unit is impossible. Furthermore, because the discharge nozzles for the various colors are also positioned close together, a dispersant must be selected that is also capable of preventing ink from getting into unstably dispersed condition, caused by contact and mixing of the different inks. For example, in those cases where an anionic dispersant and a cationic dispersant are used in separate inks, it is relatively easy to conceive of a deterioration in the dispersion stability as a result of contact and mixing of the inks within the cap unit.

In ink-jet recording that assumes full color printing, at the minimum, the 4 colors of black, cyan, magenta and yellow are required. Considering the complexity of selecting a dispersant for each color ink in such a manner that the mixing properties of each ink within the cap unit are taken into consideration, it is preferable to develop a process that enables a single common dispersant to function favorably for pigments with vastly different chemical structures, surface states, and various other properties. For this reason, polymer resin-based dispersants that can be used with a comparatively large variety of pigments are widely used as the pigments for aqueous pigment liquid dispersions for ink-jet recording, and examples of favorable polymer resin-based dispersants include various styrene-acrylic acid type copolymers.

In a styrene-acrylic acid copolymer, it is thought that the benzene ring derived from the styrene binds to an adsorption site on the pigment, whereas the carboxyl group derived from the acrylic acid develops a negative charge by ionization within the aqueous dispersion medium, causing repulsion between the dispersed particles that maintains the dispersed state. Accordingly, these styrene-acrylic acid copolymers function effectively when the pigment surface is hydrophobic, but in those cases where the pigment surface is hydrophilic, the benzene ring does not adsorb to the pigment surface and the carboxyl group adsorbs, meaning the copolymer is not always effective in achieving dispersion within the aqueous medium.
Document US2002075369 discloses a process for the preparation of a pigment dispersion which can be used as an ink for ink jet printer.

Synthetic pigments include pigments synthesized using an organic solvent as the synthesis solvent medium, such as phthalocyanine pigments and condensed polycyclic pigments, and pigments synthesized within a synthesis solvent medium containing water as the main component, such as azo-type pigments and lake pigments. Compared with pigments synthesized within an organic solvent medium, pigments synthesized within a synthesis solvent medium containing water as the main component tend to exhibit lower hydrophobicity and stronger hydrophilicity. In inks for ink-jet recording, a carbon black is typically used as the colorant for the black ink, a copper phthalocyanine pigment is used as the colorant for the cyan ink, a quinacridone pigment, which is a condensed polycyclic pigment, is used as the colorant for the magenta ink, and an azo-type pigment is used as the colorant for the yellow ink. Of these pigments, the carbon black, the copper phthalocyanine pigment and the quinacridone pigment have strongly hydrophobic surfaces, whereas the azo-type pigment, which is synthesized within a synthesis solvent medium containing water as the main component, has a strongly hydrophilic surface. Accordingly, for the azo-type pigment used for the yellow ink, adsorption of the styrene-acrylic acid copolymer does not occur so favorably as for the other colored pigments. As a result, dispersion of the pigment becomes difficult to achieve, and it is thought that because the quantity of dispersant not adsorbed to the pigment increases, dispersant that has dissolved within the dispersion medium without adsorbing to the pigment, or dispersant that exists in a micellar state, can function as an intermediary that causes aggregation of dispersed pigment particles. Accordingly, the dispersion of these types of pigments in aqueous media still presents significant problems.
Furthermore, many azo-type pigments exhibit poor light fastness. The number of yellow pigments capable of satisfying all the properties required of an ink-jet recording ink, such as light fastness, color tone, chroma saturation and color intensity, is not particularly large, and the development of yellow inks that are capable of satisfying all of these properties is so difficult and very desirable. As a result, structural selection of the styrene-acrylic acid copolymer or the like that functions as the dispersant, and investigation of dispersion processes that employ the selected dispersant have become extremely important.

On the other hand, there are also techniques for improving the surface state of the pigment using a surface treatment. Examples of these surface treatments include rosin treatment, surfactant treatment and pigment derivative treatment. Even a pigment surface that is highly hydrophilic can be converted to a hydrophobic surface state using these surface treatments. However, if such powerful dispersion energy as required to finely disperse the pigment to the primary particle size level is applied, then these additives may detach from the pigment surface, causing the surface to return to the original hydrophilic surface state of the pigment. Furthermore, it is thought that the existence of detached surface treatment agent can cause a variety of problems, including inhibiting binding between the benzene ring within the styrene-acrylic acid copolymer and the pigment adsorption site, and increasing the quantity of the polymer resin-based dispersant that is either dissolved or exists in a micellar state within the dispersion medium, resulting in insufficient dispersion. As a result, in those cases where dispersion stability is particularly important, the addition of additives that improve the surface state is not necessarily the most appropriate method. If possible, achieving a favorable dispersion state without using these additives would be preferable.

Generally, dispersing a pigment within a medium requires applying sufficient energy to the aggregated pigment particles to break down the aggregates to fine particles, and then causing the dispersant to act upon the surface of, and thoroughly wet, the resulting fine pigment particles, thereby ensuring a stable dispersion state that does not undergo re-aggregation. Conventionally, one simple process that is widely used for dispersing a pigment within an aqueous medium is a batch treatment process that involves mixing any of a variety of dispersion media, pigments and dispersants, and then conducting a dispersion treatment within a beads mill. However, attempts are also being conducted for further improving the dispersion stability of aqueous pigment liquid dispersions, by adopting a treatment process in which a greater shearing force is applied to a 'dispersant and pigment mixture' having a higher solid fraction, thereby finely dispersing the pigment within a shorter period of time, as well as accelerating the wetting action of the dispersant on the pigment surface. An example of this treatment process is a production process that includes a pretreatment kneading, wherein a mixture containing the pigment and the dispersant and the like is kneaded to form a solid-state or semisolid-state mixture, and this kneaded mixture is then dispersed within the dispersion medium. An example of a production process including this type of pretreatment kneading process is a process that includes the steps of charging a two-roll milling apparatus with a pigment and a polymer dispersant, milling the mixture to generate a dispersion of the pigment, the polymer dispersant and diethylene glycol, and then dispersing the resulting dispersion within an aqueous carrier medium (see Patent Reference 1). Furthermore, a process is also known in which ion-exchanged water and butyl carbitol are added to a solid chip with a solid fraction of 88% produced by conducting kneading using a two-roll mill, and the resulting mixture is then mixed in a high-speed mill and then dispersed within a sand mill (see Patent Reference 2).

By using these processes, the dispersibility of the pigment can be improved. However, because a kneaded mixture formed using a two-roll mill is produced by kneading at a high temperature to soften the resin, the solvent medium evaporates, resulting in a dramatic increase in the solid fraction. The kneaded mixture is cooled following kneading, and is supplied to the subsequent liquefaction step as a room temperature solid. Accordingly, the aqueous medium is added to the kneaded mixture, which has developed increased hardness as a result of cooling, and the resulting mixture must then be converted to a uniform liquid that is suitable for use within a dispersion device. However in this step, a high shearing force is not conventionally applied to the kneaded mixture, and the kneaded mixture and the aqueous medium are simply mixed together and stirred to generate a uniform mixture. However, during the conversion to a liquid form following the formation of the solid kneaded mixture, the degree to which the solid kneaded mixture can be converted to a liquid mixture of uniform state is an important factor in achieving an aqueous pigment liquid dispersion with favorable properties. In practice, the formation of the liquid state affects significantly to the initial dispersion particle size, the degree of suppression of large particles, and the long-term dispersion stability. However, conventionally, this portion of the process has not been investigated to any great degree.

For example, the production process disclosed in Patent Reference 1 is a production process in which a pretreated kneaded mixture made by using a two-roll milling apparatus is mixed with an aqueous alkali solution of potassium hydroxide as a neutralizing agent to form an aqueous pigment liquid dispersion. In this process, the kneaded mixture containing the pigment and the resin is dispersed within the aqueous alkali solution, while the base is consumed by neutralization of the acid groups within the resin. Because the contact between the kneaded mixture and the aqueous alkali solution occurs at the surface of the kneaded mixture, there is a difference in both the quantity of base present and the pH when the surface portions of the lumps of the kneaded mixture contact the aqueous alkali solution, and when the interior portions of the kneaded mixture contact the aqueous alkali solution. In this production process, it is thought that when a fine pigment particle from the kneaded mixture disperses within the aqueous medium, dispersion occurs with the resin adsorbed to the pigment surface, but if the pH of the dispersion medium is too high at this point, then the quantity of the resin component that either dissolves within the dispersion medium or exists in a micellar state, without adsorbing to the pigment surface, may increase. These resin components are unable to exist stably within the dispersion medium as the pH falls and can cause re-aggregation of fine pigment particles, and are consequently disadvantageous in terms of achieving favorable dispersion stability over an extended period.
Furthermore, the production process disclosed in Patent Reference 2 is a production process in which a pigment, a dimethylaminoethanol-neutralized aqueous resin solution, and butyl carbitol are kneaded together using a two-roll mill, and the resulting chip is then dispersed within a mixed aqueous solution containing dimethylaminoethanol and butyl carbitol using a high-speed mixer. The solid fraction concentration of the solid chip obtained from the kneading using the two-roll mill is unavoidably high, and moreover, this production process also involves adding the solid chip directly to the dispersion medium for mixing. During mixing, because a high shearing force is not imparted to the mixture, loosening individual fine pigment particles from the solid chip is inefficient, meaning it is difficult to achieve a uniform liquid mixture. It is thought that the quantity of the resin component that either dissolves within the dispersion medium or exists in a micellar state also tends to increase, which impairs dispersion.

On the other hand, processes are also known in which a mixture containing not only a resin, a pigment and a wetting agent, but also a basic compound, is subjected to kneading at a lower temperature, thereby forming a kneaded mixture with a lower solid fraction that is more readily dispersed, and water is then added to this mixture while kneading is continued, thereby producing a liquid-state mixture (see Patent Reference 3). In this type of production process, because the resin that functions as the dispersant is neutralized by the basic compound, even dispersion within the dispersion medium which does not contain a base can be achieved easily. As a result, a base need not be added to the dispersion medium, the quantity of resin component either dissolved within the dispersion medium or within a micellar state is reduced, and the dispersion stability can be improved.
Moreover, in those cases where the pigment used is a yellow pigment, an aqueous yellow pigment dispersion solution production process may be used that includes the step of liquefying the solid or semisolid kneaded mixture by continuing the kneading while adding water to the mixture (see Patent Reference 4).
The processes for producing aqueous pigment liquid dispersions disclosed in the above Patent References 3 and 4 use a kneading apparatus that includes a stirring tank and a stirring blade, and offer the advantage that liquefaction can be achieved by simply adding the aqueous medium to the kneaded mixture within the stirring tank and imparting a powerful shearing force to the mixture. Controlling the liquefaction conditions is also relatively simple. These production processes are extremely useful for application to pigments in which the pigment surface is hydrophobic, and exhibit remarkable effects in terms of reducing the occurrence of coarse particles, and improving the dispersion stability of the aqueous pigment liquid dispersion and the ink-jet recording ink. However, when applied to pigments that have only weak surface hydrophobicity such as azo-type pigments, although the properties of the resulting dispersion and ink can be improved beyond those observed for other conventional production processes, the effects observed are still not entirely satisfactory, and the dispersion stability over extended periods remains inadequate, meaning further improvements are still required.

In the processes disclosed in the above references, ensuring that the adsorption of the resin to the pigment surface occurs smoothly is extremely important in obtaining favorable dispersion stability for the resulting aqueous pigment liquid dispersion. As a result, kneading the pigment, the resin, the wetting agent and the basic compound using a powerful shearing force must be conducted as a pretreatment. However, the liquefaction step in which water and a wetting agent are mixed with the solid kneaded mixture is also very important. Furthermore, depending on the particular combination of the pigment and the dispersant, and the solid fraction concentration of the kneaded mixture, the compatibility of the kneaded mixture and the water during the liquefaction step may deteriorate, meaning the liquefaction step takes considerable time, resulting in a reduction in the production efficiency. Particularly in the case of azo-type pigments and the like with a hydrophilic pigment surface, the dispersion stability over time of the resulting pigment dispersion solution remains unsatisfactory, and further improvements are needed to reduce the quantity of the resin component either dissolved within the dispersion medium or within a micellar state. However, current investigations of the liquefaction step are not entirely satisfactory.
[Patent Reference 1]
   Japanese Unexamined Patent Application, First Publication No. Hei 06-157954
[Patent Reference 2]
   Japanese Unexamined Patent Application, First Publication No. 2001-081390
[Patent Reference 3]
   Japanese Unexamined Patent Application, First Publication No. 2005-060431
[Patent Reference 4]
   Japanese Unexamined Patent Application, First Publication No. 2005-060411

### DISCLOSURE OF INVENTION

An object of the present invention is to provide a process for producing an aqueous pigment liquid dispersion that exhibits a high degree of production efficiency, enables a stable dispersion state to be maintained over an extended period, can be used with all manner of aqueous inks and aqueous coating materials, and can be used particularly favorably for the production of ink-jet recording inks that use an azo-type pigment with particularly demanding quality requirements.

As a result of focusing their investigations on the process of mixing a kneaded mixture including a pigment (a) containing mainly an azo-type pigment, a styrene-acrylic acid copolymer (b), a basic compound (c) and a wetting agent (d1) with an aqueous medium containing water and a wetting agent as the main components, thereby conducting a liquefaction, the inventors of the present invention discovered that, in the liquefaction step, rather than mixing the kneaded mixture with only water, initiating the liquefaction by mixing the kneaded mixture with both water and a wetting agent enabled the subsequent liquefaction to proceed more efficiently, enabling the formation of a more favorable aqueous pigment liquid dispersion, and they were therefore able to complete the present invention.
In other words, the present invention provides a process for producing an aqueous pigment liquid dispersion that is formed by mixing a solid kneaded mixture including a pigment (a) containing mainly an azo-type pigment, a styrene-acrylic acid copolymer (b), a basic compound (c) and a wetting agent (d1) with an aqueous medium, the process including a liquefaction step of adding an aqueous medium containing water (e) and a wetting agent (d2) while continuing the kneading of the solid kneaded mixture, thereby generating a liquid state, wherein the total quantity of the wetting agent (d2) added in the liquefaction step is within a range from 0.5 to 40 mass% of the solid kneaded mixture at the point of initiation of the liquefaction step.
In addition, the present invention also provides an ink-jet recording ink that contains, as the main component, an aqueous pigment liquid dispersion produced using the above process for producing an aqueous pigment liquid dispersion.

Air and moisture adsorb strongly to pigment surfaces, and in order to achieve favorable dispersion, these adsorbed substances must be removed from the pigment surface, and the pigment surface thoroughly wetted with the dispersant. In the case of the kneaded mixture of the present invention, it is thought that the wetting agent (d1) initially performs the role of wetting the pigment surface. As the kneading progresses, the pigment and the styrene-acrylic acid copolymer are crushed under the effect of powerful shearing forces, and the newly formed pigment surfaces are also wet by the wetting agent, and subsequently coated with the styrene-acrylic acid copolymer. The following liquefaction step is thought to usually proceed in the manner described below. Namely, as the liquefaction step of adding water progresses, the wetting agent (d1) that wetted the pigment surface becomes diluted with the water, and the kneaded mixture lump is gradually converted to individual pigment particles in which the surface is coated with the styrene-acrylic acid copolymer. It is thought that the styrene-acrylic acid copolymer (b) functions such that, in the final structure, the benzene ring derived from the styrene binds to the pigment adsorption site, thereby coating the pigment, whereas the carboxyl group derived from the acrylic acid develops a negative charge by ionization within the aqueous medium, causing repulsion between the dispersed particles that maintains the dispersed state.

In the case of an azo pigment with a hydrophilic pigment surface, if the liquefaction step is not suitably controlled, then it is thought that favorable adsorption of the styrene-acrylic acid copolymer to the pigment may be inhibited. For example, if the liquefaction step is conducted using only water from the outset, then the styrene-acrylic acid copolymer that has adsorbed weakly to the weakly hydrophobic pigment surface is more likely to detach from the pigment surface and disperse within the water. However, by also using the wetting agent (d2) in this liquefaction step, the water dilution of the wetting agent (d1) used for wetting the pigment surface proceeds slowly, enabling the coating of the pigment surface by the styrene-acrylic acid copolymer during the liquefaction step to proceed favorably.
Furthermore, in the liquefaction step, by adding the water (e) and the wetting agent (d2) to the kneaded mixture as needed, the pigment particles that have been converted to fine particles and then coated with the resin can be dispersed within the aqueous medium. At this time, it is thought that the resin carboxyl groups positioned close to the interface between the aqueous medium and the dispersed pigment surface have a negative charge, thereby stabilizing the pigment particle dispersion. In order to obtain an aqueous pigment liquid dispersion with superior dispersion stability, the conditions should be set so that the ionization of the carboxyl groups near the interface between the aqueous medium and the dispersed pigment surface proceeds favorably.
In the initial stage of the liquefaction, simply adding the water (e) and the wetting agent (d2) has little effect of liquefaction on the solid or semisolid state of the kneaded mixture. In order to ensure an efficient liquefaction, applying a shearing force to the solid kneaded mixture while the kneading is continued in the presence of a certain quantity of water is particularly important. Applying a powerful shearing force by continuing kneading accelerates the salt formation between the resin carboxyl groups and the basic compound, and should have the effect of increasing the quantity of carboxyl groups bearing a negative charge.

By using the production process of the present invention, an aqueous pigment liquid dispersion can be obtained that has a fine dispersed particle size, favorable dispersion stability over extended periods, and properties that are ideal for use as a colorant within an ink-jet recording ink, even when using a kneaded mixture from which an aqueous pigment liquid dispersion is not obtainable with liquefaction using only water.

### BEST MODE FOR CARRYING OUT THE INVENTION

In the present invention, the term "liquefaction" describes the operations from mixing the water (e) and the wetting agent (d2) with the solid kneaded mixture containing the pigment, the resin, the wetting agent (d1) and the basic compound (c), through until the solid fraction of the mixture is lowered, and a fluid substance with a uniform liquid state is obtained. The solid kneaded mixture prepared in the kneading step is converted to liquid form via this liquefaction step, and undergoes a reduction in viscosity via a viscosity regulation step that involves further addition of the aqueous medium containing water and the wetting agent as the main components. In the present invention, the liquefaction step is a step of adding an aqueous medium containing water and a wetting agent while continuing the kneading of the solid kneaded mixture, thereby producing a liquid mixture that has fluidity. More specifically, in the present invention, the point where addition of the aqueous medium to the solid kneaded mixture is initiated is defined as the point of liquefaction step initiation. The point where the mass of the aqueous medium added is equal to the mass of the solid kneaded mixture at the point of liquefaction step initiation is deemed to be the end of the liquefaction step. The mass of the kneaded mixture at the point of liquefaction step initiation is the total mass containing not only the pigment, the styrene-acrylic acid copolymer, the basic compound and the wetting agent (d1), but also those substances added for purposes such as regulating the viscosity of the kneaded mixture in those steps between the start of the kneading step and the initiation of the liquefaction step.

A more detailed description of specifics of the present invention is provided below.
Each of the raw materials used in the production process of the present invention is described below, followed by a description of the sequence of the production process of the present invention.

The wetting agent (d1) and the wetting agent (d2) used in the solid kneaded mixture of the present invention may be any organic solvent on the condition that it remains within the pigment dispersion solution even after evaporation of the moisture content, prevents the aggregation of fine pigment particles to which the resin has adsorbed, and is soluble in water. By using these types of wetting agents, which are commonly employed as components within conventional aqueous pigment liquid dispersions and ink-jet recording inks, the wetting agents need not be removed in later steps. Specific examples of wetting agents that may be used include polyols such as glycerol, ethylene glycol, diethylene glycol, triethylene glycol, tetraethylene glycol, polyethylene glycol, propylene glycol, dipropylene glycol, polypropylene glycol, 1,3-propanediol, 1,4-butanediol, 1,5-pentanediol, 1,6-hexanediol, 1,2,6-hexanetriol, trimethylolpropane and pentaerythritol, polyhydric alcohol alkyl ethers such as diethylene glycol monobutyl ether, tetraethylene glycol monomethyl ether and propylene glycol monoethyl ether, polyhydric alcohol aryl ethers such as ethylene glycol monophenyl ether and ethylene glycol monobenzyl ether, lactams such as 2-pyrrolidone, N-methyl-2-pyrrolidone and ε-caprolactam, and 1,3-dimethylimidazolidinone.

The wetting agent (d1) and wetting agent (d2) may also use arbitrary mixtures of the organic compounds described above, and the same organic solvent may be used for both the wetting agent (d1) and the wetting agent (d2). In a similar manner to the wetting agent (d1) used during kneading, the wetting agent (d2) used during liquefaction of the kneaded mixture can be selected on the basis of whether it can give both wetting effect and dispersion effect. In practice, a wetting agent that is appropriate for the state of the pigment dispersion solution during liquefaction of the kneaded mixture should be selected, although using the same wetting agent for both the wetting agent (d1) contained within the kneaded mixture and the wetting agent (d2) used during the liquefaction step is particularly preferred, as it favorably promotes smooth resin adsorption to the pigment particle surface during liquefaction, suppresses the aggregation of fine pigment particles, and tends to reduce the quantity of free resin components that are not adsorbed to a pigment surface.
Each wetting agent may use either a single compound or a combination of two or more different compounds. Polyhydric alcohols that have a high boiling point, low volatility and a high surface tension, and are also liquid at room temperature are preferred, and glycols such as diethylene glycol and triethylene glycol are particularly desirable. Of the various possibilities, diethylene glycol is most preferred as the wetting agent (d1), as it is capable of maintaining a state during kneading that is most suited to pigment dispersion, and if diethylene glycol is used as the wetting agent (d1), then diethylene glycol is preferably also used for the wetting agent (d2).

Examples of the pigment (a) that contains mainly an azo-type pigment include conventional azo-type pigments and pigments containing an azo-type pigment as the main component. Regardless of which pigment type is used, using a wetting agent with the water during the liquefaction step yields better compatibility between the aqueous medium and the kneaded mixture during the initial stages of the liquefaction than using only water, meaning the liquefaction of the solid kneaded mixture proceeds within a shorter period of time. Furthermore, for the reasons described above, an aqueous pigment liquid dispersion with superior properties can be obtained.
The surface properties of the pigment such as the hydrophilicity of hydrophobicity or the like, which have a large effect on the pigment dispersibility, are determined by a variety of conditions during the synthesis step for the pigment crude and the pigmentation step. For example, organic pigments that have been synthesized in water during the pigment synthesis step, or in those cases where the synthesis solvent includes a plurality of components, organic pigments that have been synthesized in an organic solvent medium in which water represents the component with the highest compositional ratio, exhibit weak hydrophobicity and have hydrophilic surface properties. What is described here as the synthesis step need not necessarily be a single stage synthesis, and organic pigments obtained via a plurality of synthesis steps are also included. The surface of the organic pigment tends to exhibit hydrophilic properties even if only one step of the synthetic process uses a synthesis solvent that is either water or a synthesis solvent containing water as the main component, and in these cases, a dramatic effect can be expected by employing the production process of the present invention. For the production reasons outlined above, pigments containing an azo bond typically exhibit weak hydrophobicity and tend to have hydrophilic surface properties. Examples of pigments that contain an azo bond include azo lake pigments, insoluble monoazo pigments, diallylide pigments, bisacetoacetanilide pigments, disazopyrazolone pigments, β-naphthol pigments, naphthol AS pigments, benzimidazolone pigments and disazo condensed pigments. Examples of these pigments are listed below.

Examples of azo lake pigments include monoazo pigments such as C.I. Pigment Yellow 61, C.I. Pigment Yellow 62, C.I. Pigment Yellow 100, C.I. Pigment Yellow 133, C.I. Pigment Yellow 142, C.I. Pigment Yellow 169, C.I. Pigment Yellow 183, C.I. Pigment Yellow 190, C.I. Pigment Yellow 191, C.I. Pigment Yellow 191:1, C.I. Pigment Yellow 205, C.I. Pigment Yellow 206, C.I. Pigment Yellow 209, C.I. Pigment Yellow 209:1 and C.I. Pigment Yellow 212; β-naphthol pigments such as C.I. Pigment Red 49, C.I. Pigment Red 49:1, C.I. Pigment Red 49:2, C.I. Pigment Red 49:3, C.I. Pigment Red 50:1, C.I. Pigment Red 51, C.I. Pigment Red 53, C.I. Pigment Red 53:1, C.I. Pigment Red 53:3, C.I. Pigment Red 68, C.I. Pigment Orange 17, C.I. Pigment Orange 17:1 and C.I. Pigment Orange 46; β-oxynaphthoic acid-based pigments such as C.I. Pigment Red 48:1, C.I. Pigment Red 48:2, C.I. Pigment Red 48:3, C.I. Pigment Red 48:4, C.I. Pigment Red 48:5, C.I. Pigment Red 52:1, C.I. Pigment Red 52:2, C.I. Pigment Red 57:1, C.I. Pigment Red 58:2, C.I. Pigment Red 58:4, C.I. Pigment Red 63:1, C.I. Pigment Red 63:2, C.I. Pigment Red 64, C.I. Pigment Red 64:1 and C.I. Pigment Red 200; naphthol AS pigments such as C.I. Pigment Red 151, C.I. Pigment Red 211, C.I. Pigment Red 237, C.I. Pigment Red 239, C.I. Pigment Red 240, C.I. Pigment Red 243 and C.I. Pigment Red 247; and naphthalenesulfonic acid-based pigments such as C.I. Pigment Yellow 104, C.I. Pigment Orange 19, C.I. Pigment Red 60, C.I. Pigment Red 66, C.I. Pigment Red 67, C.I. Pigment Red 273 and C.I. Pigment Red 274.

Examples of insoluble monoazo pigments include C.I. Pigment Yellow 1, C.I. Pigment Yellow 2, C.I. Pigment Yellow 3, C.I. Pigment Yellow 5, C.I. Pigment Yellow 6, C.I. Pigment Yellow 10, C.I. Pigment Yellow 49, C.I. Pigment Yellow 60, C.I. Pigment Yellow 65, C.I. Pigment Yellow 73, C.I. Pigment Yellow 74, C.I. Pigment Yellow 75, C.I. Pigment Yellow 97, C.I. Pigment Yellow 98, C.I. Pigment Yellow 111, C.I. Pigment Yellow 116, C.I. Pigment Yellow 130, C.I. Pigment Yellow 160, C.I. Pigment Yellow 167, C.I. Pigment Yellow 203, C.I. Pigment Orange 1 and C.I. Pigment Orange 6.
Examples of diallylide pigments include C.I. Pigment Yellow 12, C.I. Pigment Yellow 13, C.I. Pigment Yellow 14, C.I. Pigment Yellow 17, C.I. Pigment Yellow 55, C.I. Pigment Yellow 63, C.I. Pigment Yellow 81, C.I. Pigment Yellow 83, C.I. Pigment Yellow 87, C.I. Pigment Yellow 90, C.I. Pigment Yellow 106, C.I. Pigment Yellow 113, C.I. Pigment Yellow 114, C.I. Pigment Yellow 121, C.I. Pigment Yellow 124, C.I. Pigment Yellow 126, C.I. Pigment Yellow 127, C.I. Pigment Yellow 136, C.I. Pigment Yellow 152, C.I. Pigment Yellow 170, C.I. Pigment Yellow 171, C.I. Pigment Yellow 172, C.I. Pigment Yellow 174, C.I. Pigment Yellow 176, C.I. Pigment Yellow 188, C.I. Pigment Orange 15, C.I. Pigment Orange 16 and C.I. Pigment Orange 44.

Examples of bisacetoacetanilide pigments include C.I. Pigment Yellow 16, C.I. Pigment Yellow 155, C.I. Pigment Yellow 198 and C.I. Pigment Yellow 212.
Examples of disazopyrazolone pigments include C.I. Pigment Orange 13, C.I. Pigment Orange 34, C.I. Pigment Red 37, C.I. Pigment Red 38, C.I. Pigment Red 41 and C.I. Pigment Red 111.
Examples of β-naphthol pigments include C.I. Pigment Orange 2, C.I. Pigment Orange 5, C.I. Pigment Red 1, C.I. Pigment Red 3, C.I. Pigment Red 4 and C.I. Pigment Red 6.

Examples of naphthol AS pigments include C.I. Pigment Red 2, C.I. Pigment Red 5, C.I. Pigment Red 7, C.I. Pigment Red 8, C.I. Pigment Red 9, C.I. Pigment Red 10, C.I. Pigment Red 11, C.I. Pigment Red 12, C.I. Pigment Red 13, C.I. Pigment Red 14, C.I. Pigment Red 15, C.I. Pigment Red 16, C.I. Pigment Red 17, C.I. Pigment Red 18, C.I. Pigment Red 21, C.I. Pigment Red 22, C.I. Pigment Red 23, C.I. Pigment Red 31, C.I. Pigment Red 32, C.I. Pigment Red 95, C.I. Pigment Red 112, C.I. Pigment Red 114, C.I. Pigment Red 119, C.I. Pigment Red 136, C.I. Pigment Red 146, C.I. Pigment Red 147, C.I. Pigment Red 148, C.I. Pigment Red 150, C.I. Pigment Red 164, C.I. Pigment Red 170, C.I. Pigment Red 184, C.I. Pigment Red 187, C.I. Pigment Red 188, C.I. Pigment Red 210, C.I. Pigment Red 212, C.I. Pigment Red 213, C.I. Pigment Red 222, C.I. Pigment Red 223, C.I. Pigment Red 238, C.I. Pigment Red 245, C.I. Pigment Red 253, C.I. Pigment Red 256, C.I. Pigment Red 258, C.I. Pigment Red 261, C.I. Pigment Red 266, C.I. Pigment Red 267, C.I. Pigment Red 268, C.I. Pigment Red 269, C.I. Pigment Orange 22, C.I. Pigment Orange 24, C.I. Pigment Orange 38, C.I. Pigment Violet 13, C.I. Pigment Violet 25, C.I. Pigment Violet 44, C.I. Pigment Violet 50 and C.I. Pigment Blue 25.

Examples of benzimidazolone pigments include C.I. Pigment Yellow 120, C.I. Pigment Yellow 151, C.I. Pigment Yellow 154, C.I. Pigment Yellow 175, C.I. Pigment Yellow 180, C.I. Pigment Yellow 181, C.I. Pigment Yellow 194, C.I. Pigment Orange 36, C.I. Pigment Orange 60, C.I. Pigment Orange 62, C.I. Pigment Orange 72, C.I. Pigment Red 171, C.I. Pigment Red 175, C.I. Pigment Red 176, C.I. Pigment Red 185, C.I. Pigment Red 208 and C.I. Pigment Violet 32.

Examples of disazo condensed pigments include C.I. Pigment Yellow 93, C.I. Pigment Yellow 94, C.I. Pigment Yellow 95, C.I. Pigment Yellow 128, C.I. Pigment Yellow 166, C.I. Pigment Orange 31, C.I. Pigment Red 144, C.I. Pigment Red 166, C.I. Pigment Red 214, C.I. Pigment Red 220, C.I. Pigment Red 221, C.I. Pigment Red 242, C.I. Pigment Red 248 and C.I. Pigment Red 262.

Of the azo-type organic pigments described above, the production process of the present invention is particularly effective when used with bisacetoacetanilide pigments, and exhibits particularly remarkable effects when the pigment is C.I. Pigment Yellow 155. C.I. Pigment Yellow 155 yields printed items that exhibit excellent light fastness and coloring tone, and a high degree of chroma saturation and print density, and consequently holds considerable promise as one of the few yellow pigments capable of satisfying the many properties required for a yellow ink for ink-jet recording. However, C.I. Pigment Yellow 155 is also known as a pigment that is extremely difficult to disperse stably within an aqueous medium, meaning as yet, no ink-jet recording inks that use C.I. Pigment Yellow 155 are available as commercial products. Accordingly, the development of an aqueous pigment liquid dispersion that uses C.I. Pigment Yellow 155 and also exhibits excellent dispersion stability has been much anticipated.

The styrene-acrylic acid copolymer (b) used in the present invention includes, as structural monomers, at least a styrene-based monomer and a monomer that contains an unsaturated aliphatic carboxylic acid having a radical polymerizable double bond. Of the various possibilities, copolymers containing a styrene monomer and at least one of acrylic acid and methacrylic acid are preferred, and copolymers containing a styrene, acrylic acid and methacrylic acid as structural monomers are particularly desirable. Furthermore, resins containing from 60 to 90 mass% of the styrene-based monomer unit relative to the total of all the monomer components, as well as an acrylic acid monomer unit and a methacrylic acid monomer unit are preferred. The proportion of the styrene-based monomer unit is even more preferably within a range from 70 to 90 mass%. In particular, the combined total of the styrene-based monomer component, the acrylic acid monomer component and the methacrylic acid monomer component is preferably at least 95 mass% within the total of all the monomer components. Because the styrene-acrylic acid copolymer (b) of the present invention contains a high concentration of the styrene-based monomer unit equivalent to at least 60 mass% of the total of all the monomer units, the copolymer adsorbs favorably to the hydrophobic pigment surfaces of colored pigments other than the yellow azo-type pigment used in the present invention, and is able to favorably maintain the dispersibility of these other pigments. The fact could be very meaningful that the present invention is also capable of achieving a similarly favorable level of dispersibility for the types of azo-type pigments widely used as yellow pigments even more significant. In contrast, if the proportion of the styrene-based monomer component is less than 60 mass%, then the affinity of the styrene-acrylic acid copolymer (b) for typical pigment surfaces having a hydrophobic surface becomes inadequate, which means the pigment surface is more difficult to coat with the resin, and tends to result in a deterioration in the dispersion stability. Furthermore, the recording properties on plain paper of the resulting ink-jet recording ink tend to deteriorate, with a decrease in the image recording density, and the water resistance properties of the ink are also prone to deterioration. Moreover, if the proportion of the styrene-based monomer component exceeds 90 mass%, then the solubility of the styrene-acrylic acid copolymer (b) in aqueous media deteriorates, the dispersibility of the pigment within the aqueous pigment liquid dispersion and the resulting dispersion stability tend to deteriorate, and when the pigment dispersion solution is used in an ink-jet recording ink, the printing stability is also prone to deterioration.

The acid number of the styrene-acrylic acid copolymer (b) used in the process for producing an aqueous pigment liquid dispersion according to the present invention is preferably within a range from 50 to 300 mgKOH/g. If the acid number is less than 50 mgKOH/g, then the hydrophilicity of the copolymer weakens, and the dispersion stability of the pigment tends to deteriorate. In contrast, if the acid number exceeds 300 mgKOH/g, then the pigment is more likely to undergo aggregation, and the water resistance of printed items produced using the ink tends to deteriorate. Acid numbers within a range from 120 to 240 mgKOH/g are particularly desirable.
Known compounds may be used as the styrene-based monomer unit that constitutes the styrene-acrylic acid copolymer (b) used in the present invention. Examples include styrene, alkylstyrenes such as α-methylstyrene, β-methylstyrene, 2,4-dimethylstyrene, α-ethylstyrene, α-butylstyrene and α-hexylstyrene, halogenated styrenes such as 4-chlorostyrene, 3-chlorostyrene and 3-bromostyrene, as well as 3-nitrostyrene, 4-methoxystyrene and vinyltoluene.
Of these styrene-based monomers, the use of an alkylstyrene monomer is preferred, and the use of styrene monomer is particularly desirable.

The styrene-acrylic acid copolymer (b) of the present invention can be obtained by copolymerization of the styrene-based monomer, the acrylic acid monomer and the methacrylic acid monomer, and using a combination of acrylic acid and methacrylic acid is preferred. The reason for this preference is that the copolymerizability during the resin synthesis improves, thereby improving the uniformity of the resin, which results in more favorable storage stability, and tends to yield a pigment dispersion solution of finer particles.

In addition to the styrene-based monomer, the acrylic acid monomer and the methacrylic acid monomer, the styrene-acrylic acid copolymer (b) used in the present invention may also include other conventional monomers that are capable of undergoing copolymerization with the above three monomers. Examples of these other monomers include acrylate esters and methacrylate esters such as methyl acrylate, methyl methacrylate, n-propyl acrylate, isopropyl acrylate, n-butyl acrylate, sec-butyl acrylate, tert-butyl acrylate, 2-ethylbutyl acrylate, 1,3-dimethylbutyl acrylate, hexyl acrylate, 2-ethylhexyl acrylate, octyl acrylate, ethyl methacrylate, n-butyl methacrylate, 2-methylbutyl methacrylate, pentyl methacrylate, heptyl methacrylate and nonyl methacrylate; acrylate ester derivatives and methacrylate ester derivatives such as 3-ethoxypropyl acrylate, 3-ethoxybutyl acrylate, dimethylaminoethyl acrylate, 2-hydroxyethyl acrylate, 2-hydroxybutyl acrylate, ethyl-α-(hydroxymethyl) acrylate, dimethylaminoethyl methacrylate, hydroxyethyl methacrylate and hydroxypropyl methacrylate; aryl acrylates and aralkyl acrylates such as phenyl acrylate, benzyl acrylate, phenylethyl acrylate and phenylethyl methacrylate; monoacrylate esters or monomethacrylate esters of polyhydric alcohols such as diethylene glycol, triethylene glycol, polyethylene glycol, glycerol and bisphenol A; dialkyl maleates such as dimethyl maleate and diethyl maleate; and vinyl acetate. These monomers may be used either alone, or in combinations of two or more different monomer components.

Typical polymerization methods can be used for producing the styrene-acrylic acid copolymer (b), and examples include methods in which the polymerization reaction is conducted in the presence of a polymerization catalyst, including solution polymerization, suspension polymerization and bulk polymerization methods. Examples of the polymerization catalyst include 2,2'-azobis(2,4-dimethylvaleronitrile), 2,2'-azobisisobutyronitrile, 1,1'-azobis(cylohexane-1-carbonitrile), benzoyl peroxide, dibutyl peroxide and butyl peroxybenzoate, and the quantity used of this catalyst is preferably within a range from 0.1 to 10.0 mass% of the monomer components.

The weight average molecular weight of the styrene-acrylic acid copolymer (b) used in the present invention is preferably within a range from 7,500 to 50,000, and is even more preferably from 7,500 to 30,000. Of these, values within a range from 7,500 to 15,000 are particularly desirable. If the weight average molecular weight is less than 7,500, then the long-term storage stability of the aqueous pigment liquid dispersion tends to deteriorate, and precipitation caused by aggregation of the pigment may also occur. If the weight average molecular weight of the styrene-acrylic acid copolymer (b) exceeds 50,000, then the resin molecules become overly long, which impedes the adsorption of the molecules to the pigment surface. Furthermore, the effects of resin molecules that are not adsorbed to the pigment tend to increase, causing an increase in the viscosity of the aqueous pigment liquid dispersion, and increasing the likelihood of aggregation of the fine pigment particles.
In this description, the weight average molecular weight refers to the value measured using a GPC (gel permeation chromatography) method, which is referenced against the molecular weight values of polystyrene standards.
The measurement is conducted using the following apparatus and conditions.
Feed pump: product name "LC-9A" manufactured by Shimadzu Corporation,
System controller: product name "SIL-6B" manufactured by Shimadzu Corporation,
Auto-injector: product name "SIL-6B" manufactured by Shimadzu Corporation, Detector: product name "RID-6A" manufactured by Shimadzu Corporation,
Data processing software: product name "Sic480II Data Station" manufactured by System Instruments Co., Ltd.,
Columns: product names "GL-R400 (guard column)" + "GL-R440" + "GL-R450" + "GL-R400M", all manufactured by Hitachi Chemical Co., Ltd.,
Eluting solvent: THF,
Elution rate: 2 ml/min.,
Column temperature: 35°C.

The glass transition point of the styrene-acrylic acid copolymer (b) is preferably at least 90°C, and is even more preferably within a range from 100 to 150°C. In the kneading treatment used for generating the fine pigment particles, the shear applied to the kneaded mixture causes the mixture to heat up, resulting in a rise in temperature. At this time, if the glass transition point is less than 90°C, then the kneaded mixture softens, and it tends to become difficult to impart a satisfactory level of shear to the pigment particles.
The styrene-acrylic acid copolymer (b) used in the present invention may be either a random copolymer or a grafted copolymer. Examples of the grafted copolymer include grafted copolymers in which either polystyrene or a copolymer of styrene and a nonionic monomer capable of undergoing copolymerization with styrene functions as the trunk or the branches of the copolymer, whereas a copolymer of the other monomers including acrylic acid, methacrylic acid and styrene functions as the branches or trunk of the copolymer. The styrene-acrylic acid copolymer (b) may also be a mixture of this type of grafted copolymer and a random copolymer.

In order to neutralize the acrylic acid portions within the copolymer, the styrene-acrylic acid copolymer (b) is used in combination with the basic compound (c). The basic compound (c) softens the resin during the kneading step, smoothes the process of coating the pigment with the resin, and also improves the dispersibility of the resin-coated pigment within the aqueous medium. Examples of compounds that can be used as the basic compound (c) include both inorganic basic compounds and organic basic compounds. Examples of organic basic compounds include methylamine, dimethylamine, trimethylamine, ethylamine, diethylamine, triethylamine, triethanolamine, diethanolamine and methyldiethanolamine. Examples of inorganic basic compounds include the hydroxides of alkali metals such as potassium and sodium, the carbonates of alkali metals such as potassium and sodium, the carbonates of alkaline earth metals such as calcium and barium, and ammonium hydroxide. Of these, alkali metal hydroxides and alcohol amines are preferred in terms of factors such as the dispersibility, storage stability and printed item water resistance when the pigment dispersion solution of the present invention is converted to an aqueous pigment liquid dispersion and then to an ink-jet recording ink. Of these basic compounds (c), alkali metal hydroxides, which are strongly basic compounds typified by potassium hydroxide, sodium hydroxide and lithium hydroxide, contribute to a reduction in the viscosity of the aqueous pigment liquid dispersion, and are therefore preferred in terms of the discharge stability of the resulting ink-jet recording ink. Furthermore, the basic groups need not necessarily be limited solely to these alkali metal hydroxides, and combinations of an alkali metal hydroxide and another basic compound may also be used. Furthermore, combinations of a plurality of different alkali metal hydroxides can also be used. Of these alkali metal hydroxides, potassium hydroxide is particularly desirable.

The quantity added of the basic compound (c) is preferably sufficient that the neutralization ratio of the total carboxyl group acid number for the styrene-acrylic acid copolymer (b) is at least 50%, and quantities that yield a neutralization ratio within a range from 80% to 120% are even more desirable. In the present invention, the neutralization ratio is a numerical value expressed by the formula shown below.
Neutralization ratio (%) = ((mass of basic compound (c) (g) x 56 x 1,000) / (resin acid number x weight equivalent of basic compound x mass of resin (g)) x 100
If the quantity of the basic compound (c) is such that the neutralization ratio is less than 50%, then the ionization of the carboxyl groups within the resin tends to be inadequate, meaning the repulsive forces between the fine pigment particles are insufficient, which leads to particle aggregation. If the quantity of the basic compound (c) yields a neutralization ratio that exceeds 120%, then the quantity of resin that is not adsorbed to the surface of the fine pigment particles increases, which can cause an increase in the viscosity of the aqueous pigment liquid dispersion, as well as re-aggregation of the dispersed particles. A mixture of an alkali metal hydroxide and an amine compound may also be used.

If the pH of the aqueous pigment liquid dispersion is low, then ionization of the carboxyl groups occurs less readily, and the dispersion of the particles tends to become unstable, resulting in aggregation. In contrast, if the pH is overly high, then the styrene-acrylic acid copolymer (b) dissolves more readily in the dispersion medium, and the quantity of the resin component either dissolved within the dispersion medium or within a micellar state increases, which increases the likelihood of aggregation. The pH of the aqueous pigment liquid dispersion is preferably within a range from 8 to 11, and the pH value can be regulated by appropriate selection of the resin acid number, the nature of the basic compound (c), and the neutralization ratio.

The production process of the present invention includes a kneading step of preparing a solid kneaded mixture that contains the pigment (a) containing mainly an azo-type pigment, the styrene-acrylic acid copolymer (b), the basic compound (c) and the wetting agent (d1); a liquefaction step of mixing water and a wetting agent with the solid kneaded mixture prepared in the kneading step, thereby generating a uniform liquid mixture; if necessary a dispersion step of dispersing the liquid mixture in an aqueous medium; and if necessary a viscosity regulation step of adding an aqueous medium to the liquid mixture to adjust the viscosity of the liquid mixture to a value that is appropriate for the dispersion device being used.
There are no particular restrictions on the kneading step used in producing an aqueous pigment liquid dispersion of the present invention, provided the step is capable of preparing a solid kneaded mixture that contains the pigment (a) containing mainly an azo-type pigment, the styrene-acrylic acid copolymer (b), the basic compound (c) and the wetting agent (d1). The solid kneaded mixture is preferably prepared by kneading a mixture that includes the basic compound (c) mixed with the pigment (a) containing mainly an azo-type pigment, the styrene-acrylic acid copolymer (b) and the wetting agent (d1), and producing the solid kneaded mixture by kneading a mixture that includes the basic compound (c) from the initial stages of the kneading step is particularly preferred. By including the basic compound (c) during the kneading step, the carboxyl groups within the styrene-acrylic acid copolymer (b) are neutralized by the basic compound (c), causing an improvement in the dispersibility. Furthermore, the copolymer also undergoes swelling and surface softening under the influence of the wetting agent (d1), leading to the formation of a single lump of a mixture containing the copolymer and the pigment (a) that contains mainly an azo-type pigment. This mixture is a solid at normal temperatures, but has an extremely high viscosity at the kneading temperature of 50°C to 100°C, and therefore a large shearing force can be imparted to the mixture during kneading, enabling the pigment (a) containing mainly an azo-type pigment to be ground efficiently into fine particles, and enabling the newly formed pigment surfaces generated as a result of the grinding to be efficiently wet by the styrene-acrylic acid copolymer (b) and the wetting agent (d1), thereby enabling the production of a stable fine dispersion within water.

In the kneading step, the addition of the basic compound (c) and the wetting agent (d1) causes the styrene-acrylic acid copolymer (b) to adopt a swollen state. As a result, the copolymer can be softened at a temperature that is far below the glass transition point.
Moreover, as a result, there is no need to add a high-solubility solvent capable of dissolving the copolymer, and because this removes the necessity for a step to subsequently remove the solvent following kneading, the productivity improves.
The solid content ratio within the kneaded mixture of the present invention can be set to any value that enables the kneading to be conducted. In order to enable a satisfactory level of shear to be imparted to the pigment, thereby finely dispersing the pigment, the mixture is preferably kneaded in a state that exhibits a certain degree of hardness, which in terms of the solid content ratio, is preferably within a range from 50 to 80 mass%. If the solid content ratio is less than 50 mass%, then the kneaded mixture is soft, and the required level of shear cannot be imparted to the pigment, whereas if the solid content ratio exceeds 80 mass%, then when water and a wetting agent are added to liquefy the kneaded mixture, liquefaction becomes difficult. The solid content ratio within the kneaded mixture varies throughout the kneading step as the solvent evaporates, even if a kneading apparatus within a sealed system is used, but the solid content ratio referred to here represents the solid content ratio at the point of initiation of the liquefaction of the kneaded mixture.
The resin/pigment ratio within the kneaded mixture of the present invention may be selected as desired, but is preferably within a range from 1/10 to 2/1. This ratio is even more preferably within a range from 1/10 to 1/2.

The kneading apparatus used in the kneading step may use any conventional apparatus that is capable of kneading a mixture having a high viscosity and a high solid content ratio. Roll mills such as two-roll mills or three-roll mills in which the kneading is conducted within an open system may be used, but with kneading using such roll mills, because the kneaded mixture must be combined as a single lump from the initial stages of kneading, the quantity of resin used tends to be large. In order to enable the solid content ratio during kneading to be maintained within a specified range, and enable a stable shearing force to be imparted to the kneaded mixture from the start to the end of the kneading step, closed systems or kneading devices that can be converted to closed systems are preferred, as they enable suppression of volatilization of the wetting agent and the like. The use of a kneading device that includes a stirring tank, a stirring tank lid, and a uniaxial or multiaxial stirring blade is preferred. There are no particular restrictions on the number of stirring blades, although in order to achieve a more favorable kneading action, the use of two or more stirring blades is preferred.
If a kneading device with this type of construction is used, then following production process of the colored kneaded mixture for an aqueous pigment liquid dispersion via the kneading step is possible. Namely, the kneaded mixture need not be removed from the kneading device, but rather water and a wetting agent can be simply added directly to the same stirring tank to dilute the kneaded mixture, then the mixture can be used to initiate the initial stages of the liquefaction step with stirring, and an aqueous medium containing water and the wetting agent as the main components can be added to the mixture to enable the liquefaction step to proceed.
Examples of this type of device include a Henschel mixer, pressurized kneader, Banbury mixer or planetary mixer, and of these, a planetary mixer is particularly desirable. A planetary mixer refers to a planetary-type kneading device, and is the generic term used for kneading apparatus equipped with a stirring blade that sweeps out a planetary motion (hereafter, the name planetary mixer is used). In the production process of the present invention, kneading is performed on a colored kneading mixture that contains a pigment and a resin and has a high solid fraction concentration, and the viscosity varies over a wide range as the kneading progresses, depending on the state of the kneaded mixture. Planetary mixers are particularly suited to coping with a wide range of viscosities from low viscosity to high viscosity, and all of the operations from the commencement of kneading, through to the liquefaction step and the viscosity regulation step using an aqueous medium can be conducted consecutively within the same apparatus. Moreover, addition of the wetting agent is comparatively simple, distillation under reduced pressure is possible, and regulation of the viscosity and the shearing force during the kneading step is relatively simple. Furthermore, in the stirring bar of a typical planetary mixer, the rotational axis is separate from the stirring tank portion, and the rotational axis is not housed inside the stirring tank, which is ideal in terms of preventing contamination and facilitating cleaning.

The liquefaction step in the process for producing an aqueous pigment liquid dispersion according to the present invention is a step in which water and a wetting agent are mixed with the solid kneaded mixture prepared in the kneading step, thereby lowering the solid fraction and producing a fluid substance with a uniform liquid state.
In the liquefaction step, kneading of the solid kneaded mixture is continued, while water (e) and the wetting agent (d2) are added. In the present invention, the aqueous medium refers to a liquid medium that contains water (e) and the wetting agent as the main components. In the production process of the present invention, conducting the kneading and the liquefaction of the kneaded mixture in a single consecutive batch treatment is preferred, but this type of consecutive operation is not an absolute necessity. Furthermore, the kneading operation conducted during the liquefaction step need not necessarily be conducted using the same method as that employed during the kneading step, and the kneading method and/or kneading apparatus may be altered to facilitate the addition of the aqueous medium. For example, an open system such as a roll mill, pressurized kneader or Banbury mixer that has no stirring tank may be used. Specifically, following completion of the kneading but prior to removal of the kneaded mixture, an aqueous medium may be added to initiate the liquefaction of the kneaded mixture, and the mixture can then be removed, and a different apparatus can be used to add an additional quantity of the aqueous medium. However, conducting the liquefaction step immediately following the kneading step, using the same apparatus, enables a dramatic improvement in the productivity. Accordingly, the use of the aforementioned kneading device including a stirring tank, a stirring tank lid, and a uniaxial or multiaxial stirring blade is preferred, and the use of a planetary mixer is ideal.

In the liquefaction step, as the solid fraction of the solid kneaded mixture decreases with the addition of the aqueous medium, the extremely large shearing force generated during kneading and the heat generation caused by that shearing force decrease, and the product is converted to a uniform liquid that exhibits fluidity even at normal temperatures. In order to ensure that the liquefaction step proceeds smoothly, resulting in the efficient production of a uniform liquid mixture, the addition of the wetting agent (d2) during the initial stages of the liquefaction step, namely during the stages where the solid fraction within the mixture of the kneaded mixture and the aqueous medium is still high, is particularly important. The wetting agent (d2) is preferably added from the point of initiation of the liquefaction step.
In the liquefaction step, a uniform liquid mixture with favorable fluidity is usually obtained once a quantity of the aqueous medium equivalent to at least 60 mass% of the mass of the solid kneaded mixture has been added, although this quantity varies depending on the solid content ratio within the kneaded mixture. In the present invention, the liquefaction step is deemed to have finished when a quantity of the aqueous medium has been added that is equal to the mass of the solid kneaded mixture at the point of liquefaction step initiation, where addition of the aqueous medium is started. In the present invention, the total quantity of the wetting agent (d2) added during this liquefaction step is preferably within a range from 0.5 to 40 mass% of the solid kneaded mixture at the point of liquefaction step initiation. This quantity is even more preferably within a range from 1 to 30 mass%, and is most preferably from 5 to 25 mass%. Moreover, this wetting agent (d2) is preferably added during the initial stages of the liquefaction step, and the entire quantity of the wetting agent (d2) is preferably added prior to the point where 60 mass% of the total quantity of the aqueous medium to be added during the liquefaction step has been added. Moreover, the entire quantity of the wetting agent (d2) is even more preferably added prior to the point where 45 mass% of the total quantity of the aqueous medium has been added.

Provided the total quantity added of the wetting agent is at least 0.5 mass% of the solid kneaded mixture at the point of liquefaction step initiation, the effects of adding the wetting agent tend to be realized satisfactorily. Furthermore, provided the total quantity added of the wetting agent is not more than 40 mass% of the solid kneaded mixture at the point of liquefaction step initiation, the quantity of water added is also satisfactory, meaning ionization of the carboxyl groups within the styrene-acrylic acid resin proceeds favorably, thereby reducing the likelihood of aggregation of pigment particles. Furthermore, a quantity within this range also means that an unnecessarily large quantity of the wetting agent is not added to the aqueous pigment liquid dispersion, which is preferred in terms of the ink design properties in later steps. In the liquefaction step, including a certain quantity of the main component water from the initial stages ensures that the reduction in the viscosity proceeds more smoothly. In order to limit the total quantity of the wetting agent (d2) while ensuring that the liquefaction step proceeds efficiently, the proportion of the wetting agent (d2) within the aqueous medium used in the liquefaction step is preferably within a range from 30 to 70 mass%, and is even more preferably from 40 to 60 mass%. The ratio between the wetting agent (d2) and water need not be constant throughout the liquefaction step, but may be altered appropriately in accordance with the state of the kneaded mixture. In the initial stages of the liquefaction step, because the kneaded mixture is not particularly compatible with the water, the ratio of the wetting agent (d2) is preferably set somewhat higher, and then once the quantity of water relative to the kneaded mixture has increased, the ratio of the water is preferably adjusted to a higher value.
In the present invention, mixing the wetting agent (d2) and the water together in advance, and then adding the mixture as an aqueous medium is preferred, as it enables favorable uniformity to be achieved more quickly following addition of the aqueous medium. Furthermore, in the liquefaction step, the aqueous medium may be added continuously in small quantities while the kneading of the solid kneaded mixture is continued. Alternatively, the aqueous medium may be added to the kneaded mixture in two or more consecutive batches. Kneading of the kneaded mixture may be continued during the addition of the aqueous medium, or alternatively, the kneading may be halted, and then following each addition of the aqueous medium, kneading of the mixture may be recommenced to make the mixture uniformly.
In order to obtain the desired fine pigment particles with the resin adsorbed thereto, the entire system is preferably kept in a uniform state while the liquefaction of the kneaded mixture gradually proceeds. In other words, when performing liquefaction of the kneaded mixture, rather than placing the kneaded mixture in a large quantity of the aqueous medium and then conducting stirring and dispersion, it is important that the aqueous medium is added gradually to the kneaded mixture, and a high shearing force is applied while the entire system is maintained in a uniform state, thereby allowing the liquefaction to proceed gradually.

In the liquefaction step of the present invention, either the wetting agent (d2) and water are added together, or an aqueous medium that contains both the wetting agent (d2) and water is added. Both the wetting agent (d2) and water may be added throughout the entire liquefaction step, but reducing the addition of the wetting agent when a certain quantity of the aqueous medium has been added to the solid kneaded mixture, thereby increasing the quantity of water within the mixture, rather enables adsorption of the resin to the surface of the pigment particles to proceed more favorably. The ideal timing at which the addition of the wetting agent should be reduced, and the addition then switched to an aqueous medium containing an increased proportion of water varies depending on the kneaded mixture, although the timing of this switch can be determined on the basis of the ease with which the kneaded mixture is wetted by the added aqueous medium, and the compatibility of the aqueous medium with the kneaded mixture.
Particularly in the case of azo pigments, in which surfaces to which benzene rings can readily adsorb are few and surfaces to which carboxyl groups can adsorb are numerous, particular attention is preferably paid during the addition of the aqueous medium to the solid kneaded mixture during the liquefaction of the kneaded mixture within the aqueous medium, and particularly in the initial stages of the liquefaction step, the aqueous medium is preferably added gradually so that the entire system remains in a uniform state during the liquefaction of the kneaded mixture and the formation of the aqueous pigment liquid dispersion.

Additional aqueous medium is then added to the uniform liquid mixture formed in the liquefaction step to regulate the viscosity and the solid fraction.
The liquid mixture obtained by mixing the solid kneaded mixture prepared in the kneading step of the present invention with an aqueous medium and then completing the liquefaction step still contains coarse particles with particle sizes that fall into a particle size range not readily determinable by measurement using a Laser Doppler particle size analyzer. In the dispersion step, these coarse particles are crushed and classified, enabling the dispersion stability of the aqueous pigment liquid dispersion to be further improved, and consequently performing such a dispersion step is desirable.

By conducting the dispersion step described below, the ink-jet properties such as the discharge stability, the dispersibility and the print density can be improved when an ink-jet recording ink is prepared. The pigment (a) containing mainly an azo-type pigment that is present within the liquid mixture formed from the solid kneaded mixture and the aqueous medium has already been ground finely during the kneading step and then coated with the styrene-acrylic acid copolymer (b) that functions as the dispersant, and consequently exhibits favorable dispersibility within water. As a result, the pigment (a) containing mainly an azo-type pigment can be readily dispersed within an aqueous medium in a short period of time, which improves the production efficiency. Accordingly, a dispersion step that is conducted over a longer period than is necessary is actually undesirable. For example, in the case of a nano mill, which represents one type of beads mill, a dispersion time of 30 seconds to 3 minutes is sufficient. If the dispersion time is shorter than this dispersion time range, then removal of aggregated particles tends to be incomplete, increasing the likelihood of aggregation and precipitation of the pigment. In contrast, if the dispersion step is conducted for a time that exceeds the above dispersion time range, then the styrene-acrylic acid copolymer (b) adsorbed to the pigment surface during the kneading step is more likely to detach, meaning the coating of the pigment surface becomes incomplete, which tends to cause a deterioration in the stability in the case where the ink is prepared. As a result, in those cases where crushing of the pigment during the kneading step has progressed favorably, the dispersion step may be omitted entirely.

In the aqueous pigment liquid dispersion for ink-jet recording obtained following completion of the dispersion step, the quantity of the pigment (a) containing mainly an azo-type pigment is preferably within a range from 5 to 25 mass%, and is even more preferably from 10 to 20 mass%. If the quantity of the pigment (a) containing mainly an azo-type pigment is less than 5 mass%, then the coloring of the ink-jet recording ink produced from the aqueous pigment liquid dispersion for an ink-jet ink tends to be inadequate, and a satisfactory image density may be unattainable. In contrast, if the quantity exceeds 25 mass%, then the dispersion stability of the pigment within the aqueous pigment liquid dispersion for an ink-jet ink tends to deteriorate. Furthermore, in terms of ensuring favorable dispersion stability over an extended period, the pigment (a) containing mainly an azo-type pigment and coated with the styrene-acrylic acid copolymer (b) preferably has a 90% volume average particle diameter, which is measured using a Laser Doppler particle size distribution analyzer, of not more than 300 nm, and an average particle diameter of not more than 160 nm is even more desirable. The wetting agent used in the dispersion step can be the same compound as that used during kneading.

Conventional devices can be employed as the dispersing machine used during the dispersion step. In those cases where a more powerful dispersing action is required, machines that use media, such as a paint shaker, ball mill, nano mill, pico mill, attritor, basket mill, sand mill, sand grinder, dyno mill, dispermat, SC mill, spike mill or agitator mill can be used.
Examples of the media include conventional media such as glass, ceramics, metals, metal oxides and plastics, and the size of the media may be selected as needed. Furthermore, examples of dispersing machines that do not use media include an ultrasonic homogenizer, which uses ultrasonic waves to effect dispersion, a high-pressure homogenizer, nanomizer, Genus PY or altimizer, which achieve dispersion via the impact forces generated when droplets are caused to collide at high pressure, a dissolver, disper or high-speed blade dispersing machine, which achieve dispersion via high-speed rotation of a special stirring blade, and a Despa mill, TORNADO, microblender, cavitron or homomixer or the like, which achieve dispersion by utilizing the shearing force that occurs when the liquid passes through a narrow gap between a rotor and a stator. Any one of the above dispersing machines may be used alone, or a combination of two or more different machines may be used. Of the above, dispersing machines that use media exhibit a powerful dispersing action, and are consequently preferred. Following dispersion, if required, the concentration of the dispersion may be adjusted by adding more of the aqueous medium.

Classification of the coarse particles can be conducted using a technique such as centrifugal separation or filtering, although in order to achieve efficient separation of the coarse particles, it is important that the dispersion obtained via the process described above is subjected to centrifugal separation, thereby removing those coarse particles that exist within the aqueous pigment liquid dispersion.
By performing a centrifugal separation following completion of the dispersion step and preparation of the aqueous dispersion, those coarse particles that exhibit unsatisfactory dispersibility can be removed. The centrifugal separation can be conducted under conditions of at least 10,000 G for at least 3 minutes, and is preferably conducted at 15,000 to 21,000 G for a period of 5 to 15 minutes. By performing this coarse particle removal step, precipitation within the aqueous pigment liquid dispersion that has undergone the removal step can be suppressed significantly.

The aqueous pigment liquid dispersion obtained using the production process of the present invention can be used for various applications such as aqueous printing inks and aqueous coating materials. It is particularly suited to use as an ink-jet recording ink. The composition of, and method used for preparing these inks and coating materials may employ conventional compositions and methods.
An ink-jet recording ink of the present invention can be prepared by normal methods using the aqueous pigment liquid dispersion described above.
When an ink-jet recording ink is prepared using the aqueous pigment liquid dispersion of the present invention, the treatments and additives listed within (i) to (iii) below can be used to improve the ink in accordance with the ink formulation.

(i) The wetting agent (d1) described above may be added to prevent drying of the ink. For the purpose of preventing drying, the wetting agent content within the ink is preferably within a range from 3 to 50 mass%.

(ii) A penetrant may be added to improve the penetration of the ink into the recording medium and regulate the dot diameter on the recording medium.
Examples of the penetrant include lower alcohols such as ethanol and isopropyl alcohol, ethylene oxide additives of alkyl alcohols such as ethylene glycol hexyl ether and diethylene glycol butyl ether, and propylene oxide additives of alkyl alcohols such as propylene glycol propyl ether.
The penetrant content within the ink is preferably within a range from 0.01 to 10 mass%.

Furthermore, a surfactant may also be used as a penetrant. There are no particular restrictions on the surfactant, and examples include all manner of anionic surfactants, nonionic surfactants, cationic surfactants and amphoteric surfactants. Of these, anionic surfactants and nonionic surfactants are preferred.

Examples of anionic surfactants include alkylbenzenesulfonates, alkylphenylsulfonates, alkylnaphthalenesulfonates, salts of higher fatty acids, sulfates of higher fatty acid esters, sulfonates of higher fatty acid esters, sulfates and sulfonates of higher alcohol ethers, higher alkylsulfosuccinates, polyoxyethylene alkyl ether carboxylates, polyoxyethylene alkyl ether sulfates, alkyl phosphates and polyoxyethylene alkyl ether phosphates. Specific examples of these anionic surfactants include dodecylbenzenesulfonates, isopropylnaphthalenesulfonates, monobutylphenylphenol monosulfonates, monobutylbiphenylsulfonates and dibutylphenylphenol disulfonates.

Examples of nonionic surfactants include polyoxyethylene alkyl ethers, polyoxyethylene alkylphenyl ethers, polyoxyethylene fatty acid esters, sorbitan fatty acid esters, polyoxyethylene sorbitan fatty acid esters, polyoxyethylene sorbitol fatty acid esters, glycerol fatty acid esters, polyoxyethylene glycerol fatty acid esters, polyglycerol fatty acid esters, sucrose fatty acid esters, polyoxyethylene alkylamines, polyoxyethylene fatty acid amides, fatty acid alkylolamides, alkyl alkanolamides, acetylene glycol, oxyethylene adducts of acetylene glycol and polyethylene glycol polypropylene glycol block copolymers. Of these, polyoxyethylene nonylphenyl ether, polyoxyethylene octylphenyl ether, polyoxyethylene dodecylphenyl ether, polyoxyethylene alkyl ethers, polyoxyethylene fatty acid esters, sorbitan fatty acid esters, polyoxyethylene sorbitan fatty acid esters, fatty acid alkylolamides, acetylene glycol, oxyethylene adducts of acetylene glycol and polyethylene glycol polypropylene glycol block copolymers are preferred.

Examples of other surfactants that may be used include silicone-based surfactants such as polysiloxane oxyethylene adducts; fluorine-based surfactants such as perfluoroalkyl carboxylates, perfluoroalkyl sulfonates and oxyethylene perfluoroalkyl ethers; and biosurfactants such as spicrispolic acid, rhamnolipid and lysolecithin.
These surfactants may be used either alone, or in mixtures containing two or more different surfactants.
Furthermore, considering the solution stability of the surfactant, the surfactant HLB (Hydrophile-Lipophile Balance) value is preferably within a range from 7 to 20.
In those cases where a surfactant is added, the quantity added is preferably within a range from 0.001 to 1 mass%, even more preferably from 0.001 to 0.5 mass%, and is most preferably from 0.01 to 0.2 mass% relative to the entire mass of the ink. If the quantity of the surfactant is less than 0.001 mass%, then the effects of the surfactant tend to be difficult to obtain, whereas if the quantity exceeds 1 mass%, then problems such as image bleeding are more likely.

(iii) If required, preservatives, viscosity regulators, pH regulators, chelating agents, plasticizers, antioxidants and ultraviolet absorbers and the like may also be added.

### EXAMPLES

A more detailed description of the present invention is presented below using a series of Examples. In the description of following Examples, unless stated otherwise, the units "parts" represent "parts by mass". The acrylic acid copolymer used in Examples and Comparative Examples is as described below.
Styrene-acrylic acid copolymer A: a copolymer in which the monomer composition is represented by: styrene / acrylic acid / methacrylic acid = 77/10/13 (mass ratio), having an acid number of 153 to 156 mgKOH/g, and a weight average molecular weight of 7,700.

The aqueous pigment liquid dispersions prepared in following Examples and Comparative Examples were dispersed using a media dispersion, and the resulting colored dispersions were then evaluated for the following properties.

### (Initial Volume Average Particle Diameter)

Following completion of the liquefaction step, the aqueous pigment liquid dispersion was subjected to a media dispersion, and the resulting colored dispersion was diluted 2,500 times with ion-exchanged water, and the particle size distribution and volume average particle diameter were then measured using a Laser Doppler particle size distribution analyzer (NANOTRAC UPA-EX150, manufactured by Nikkiso Co., Ltd.).

### (Dispersion Stability)

The aqueous pigment liquid dispersion was subjected to a media dispersion and a centrifugal separation treatment, and the resulting colored dispersion was then sealed inside a borosilicate glass collection vial and left to stand for 2 weeks at 70°C. The volume average particle diameter after being left to stand was then measured using the same method as that described for the initial volume average particle diameter. Furthermore in those cases where the ink-jet recording ink is formulated using the colored dispersion, the volume average particle diameter of the ink-jet recording ink was also measured in the same manner after being left to stand for 6 weeks at 60°C, and the result was compared with the volume average particle size prior to the leaving period.

### (Example 1)

A mixture with the composition shown below was placed inside a planetary mixer PLM-50 with a capacity of 50 liters (manufactured by Inoue Manufacturing Co., Ltd.), the jacket temperature was raised to 60°C, and the mixture was kneaded at high speed (rotational speed: 59 rpm, orbital speed: 20 rpm).
150 parts of the styrene-acrylic acid copolymer A (acid number: 153 mgKOH/g)
500 parts of Ink Jet Yellow 4G VP2532 (C.I. Pigment Yellow 155) (manufactured by Clariant Japan K.K.)
54 parts of a 34 mass% aqueous solution of potassium hydroxide
(neutralization ratio: 80%)
170 parts of diethylene glycol
When kneading was started, the electrical current value rose to a value within a range from 10 to 15 A, and this electrical current value then gradually decreased over time to a value within a range from 7 to 10 A. This state was maintained for two hours to complete the kneading step. Subsequently, a 50 mass% aqueous solution of diethylene glycol in ion-exchanged water was added in portions of 20 parts per addition. This operation was repeated 18 times to allow the liquefaction to proceed. The interval between the additions was set to 40 minutes between the first and second additions, to 40 minutes between the second and third additions, and for the remaining additions, was set to the time taken for the added aqueous solution of diethylene glycol to spread through the entire kneaded mixture to form a uniform state. The time taken from the third addition through to completion of the 18th addition was 40 minutes. At this point, the kneaded mixture was in a paste-like form. Following the addition of 360 parts of the 50% aqueous solution of diethylene glycol across eighteen separate additions in this manner, 1,020 parts of ion-exchanged water was added, yielding a yellow aqueous pigment mixed solution A. The 90% volume average particle diameter of the thus obtained aqueous pigment mixed solution was 251 nm, the average particle diameter was 143 nm, and the solid fraction concentration was 29 mass%.

Diethylene glycol and ion-exchanged water were then added to the obtained yellow aqueous pigment mixed solution A using the formulation shown below, and the mixture was treated with a beads mill.
2,000 parts of the yellow aqueous pigment mixed solution A
87 parts of diethylene glycol
720 parts of ion-exchanged water

### - Beads Mill Treatment Conditions

Dispersion machine: Nano mill NM-G2L (manufactured by Asada Iron Works Co., Ltd.)
Beads φ: 0.3 mm zirconia beads
Beads fill quantity: 85%
Temperature of cooling water: 10°C
Rate of revolution: 2,660 revolutions/minute
(Disc circumferential speed: 12.5 m/s)
Feed quantity: 200 g/10 seconds
Following circulatory treatment under the above conditions for 1.5 hours, the liquid passing through the beads mill was recovered. The recovered dispersed liquid was then subjected to a centrifugal separation at a maximum of 13,000 G for 10 minutes, yielding a yellow aqueous pigment liquid dispersion A with an average particle diameter of 125 nm and a pigment concentration of 15 mass%. The yellow aqueous pigment liquid dispersion A was left to stand for 2 weeks at 70°C inside a sealed silicate glass collection vial. The average particle diameter after this leaving period was 128 nm.

Using the yellow aqueous pigment liquid dispersion A, a yellow ink A for ink-jet recording was prepared with the ink formulation shown below.
266 parts of the yellow aqueous pigment liquid dispersion A
80 parts of 2-pyrrolidinone
80 parts of triethylene glycol monobutyl ether
30 parts of glycerol
5 parts of SURFYNOL 440 (manufactured by Air Products and Chemicals Inc.)
539 parts of ion-exchanged water
The viscosity of the yellow ink A was 2.5 mPa·s, and the average particle diameter was 152 nm.
The yellow ink A was sealed inside a silicate glass collection vial and left to stand for 6 weeks at 60°C. The viscosity after this leaving period was 2.6 mPa·s, and the volume average particle diameter was 144 nm.
40 g of the yellow ink A was placed in the black cartridge of a commercially available ink-jet printer EM-930C (manufactured by Seiko Epson Corporation), and printing was conducted. Solid printing was conducted at A4 size until the ink was completely consumed, and favorable printing properties were obtained, with no patchy ink coverage.

### (Comparative Example 1)

Using the same blend of raw materials as that described for Example 1, kneading was commenced using the same apparatus under the same conditions. 200 g of ion-exchanged water was then added to the mixture instead of the 50 mass% aqueous solution of diethylene glycol, in the same manner as that described for Example 1. The interval between the additions was set to 40 minutes between the first and second additions, to 40 minutes between the second and third additions, and for the fourth addition onwards, was set to the time taken for the added ion-exchanged water to be incorporated uniformly within the mixture. Unlike Example 1, the water exhibited comparatively poor compatibility, and after the fourth addition, the surface of the kneaded mixture developed a dry state, and when the sixth addition was made, the lump of the solid kneaded mixture broke into smaller portions, forming a state that appeared like a mixture of sand and pebbles. From this point, a further five additions of 20 parts of ion-exchanged water were made, but the sand-like kneaded mixture was unable to be liquefied in the initial stages of the liquefaction step.
In this manner, the solid kneaded mixture prepared in Comparative Example 1 as unable to be liquefied in the initial stages of the liquefaction step, and a uniform mixture could not be produced. Moreover, by using an additional wetting agent and additional ion-exchanged water, a mixture with the solid content ratio used in the dispersion step was able to be prepared, but the mixture was not a uniform fluid substance, with large coarse particles clearly visible within the mixture, and even if this mixture was subjected to the treatment of the dispersion step, it was clear that only an aqueous pigment liquid dispersion with numerous large coarse particles and poor dispersion stability could be produced.

In order to demonstrate that the production process of the present invention is particularly effective for pigments (a) containing mainly an azo-type pigment, Reference Examples relating to the liquefaction step for typical pigments of the other three colors are presented below for the purposes of comparison. In these Reference Examples, a styrene-acrylic acid copolymer B with the same monomer composition as the styrene-acrylic acid copolymer A but with an average molecular weight of 12,000 was also used.
Styrene-acrylic acid copolymer B: a resin in which the monomer composition is represented by: styrene / acrylic acid / methacrylic acid = 77/10/13 (mass ratio), having an acid number of 153 to 156 mgKOH/g, and a weight average molecular weight of 12,000.

### (Reference Example 1)

### Magenta Dispersion using a Quinacridone Pigment

A mixture with the composition shown below was kneaded using the same apparatus and the same conditions as those described for Example 1.
75 parts of the styrene-acrylic acid copolymer B (acid number: 153 mgKOH/g)
462.5 parts of FASTOGEN SUPER MAGENTA RTS (C.I. Pigment Red 122) (manufactured by Dainippon Ink and Chemicals, Incorporated)
37.5 parts of phthalimidomethylated 3,10-dichloroquinacridone (average number of phthalimidomethyl groups per molecule: 1.4)
33.7 parts of a 34 mass% aqueous solution of potassium hydroxide
(neutralization ratio: 100%)
270 parts of diethylene glycol
The raw materials were combined and kneading was started, and the maximum electrical current value at this point was 17 A. Three hours after commencing kneading, liquefaction was conducted by adding ion-exchanged water in portions of 20 parts per addition. The interval between the additions of ion-exchanged water was set to the time taken for the added ion-exchanged water to spread through the entire kneaded mixture to form a uniform state. A total of 18 additions were made. The time taken from the point of liquefaction initiation through to completion of the 18th addition was 130 minutes. At this point, the kneaded mixture was in a paste-like form. Subsequently, a further 570 parts of ion-exchanged water was added over 8 separate addition repetitions, thereby yielding a magenta aqueous pigment mixed solution 1. The 90% volume average particle diameter of the thus obtained aqueous pigment mixed solution was 251 nm, the average particle diameter was 143 nm, and the solid fraction concentration was 34 mass%.

Diethylene glycol and ion-exchanged water were then added to the obtained magenta aqueous pigment mixed solution, and the mixture was dispersed with a beads mill using the same conditions as those described for Example 1.
1,800 parts of the magenta aqueous pigment mixed solution 1
2.8 parts of diethylene glycol
1384.7 parts of ion-exchanged water
Following circulatory treatment under the above conditions for 0.5 hours, the liquid passing through the beads mill was recovered. The recovered dispersed liquid was then subjected to a centrifugal separation in the same manner as that described for Example 1, yielding a magenta aqueous pigment liquid dispersion with a volume average particle diameter of 138 nm and a pigment concentration of 15 mass%. When the magenta dispersion was subjected to a dispersion stability test in the same manner as Example 1, the volume average particle diameter after leaving at high temperature was 140 nm.
With the exception of replacing the yellow aqueous pigment liquid dispersion A used in Example 1 with the above magenta aqueous pigment liquid dispersion, a magenta ink for ink-jet recording was prepared using the same formulation as in Example 1.
The viscosity of the magenta ink was 2.4 mPa·s, and the volume average particle diameter was 134 nm.
The magenta ink was sealed inside a silicate glass collection vial and left to stand for 6 weeks at 60°C. The viscosity after this leaving period was 2.6 mPa·s, and the volume average particle diameter was 146 nm.
40 g of the magenta ink 1 was placed in the black cartridge of a commercially available ink-jet printer EM-930C (manufactured by Seiko Epson Corporation), and printing was conducted. Solid printing was conducted at A4 size until the ink was completely consumed, and favorable printing properties were obtained, with no patchy ink coverage.

### (Reference Example 2)

### Cyan Dispersion using a Phthalocyanine Pigment

A mixture with the composition shown below was placed inside the same planetary mixer PLM-50 with a capacity of 50 liters (manufactured by Inoue Manufacturing Co., Ltd.) as that used in Example 1 and Comparative Example 1, and was then kneaded under the same conditions as those described for Example 1 and Comparative Example 1.
150 parts of the styrene-acrylic acid copolymer A (acid number: 153 mgKOH/g)
500 parts of FASTOGEN BLUE TGR (C.I. Pigment Blue 15:3)
(manufactured by Dainippon Ink and Chemicals, Incorporated)
67.5 parts of a 34 mass% aqueous solution of potassium hydroxide
(neutralization ratio: 100%)
200 parts of diethylene glycol
The raw materials were combined and kneading was started, and the maximum electrical current value at this point was 15 A. Two hours after commencing kneading, liquefaction was conducted by adding ion-exchanged water in portions of 20 parts per addition, in the same manner as the liquefaction step used in Comparative Example 1. The interval between the additions of ion-exchanged water was set to the time taken for the added ion-exchanged water to spread through the entire kneaded mixture to form a uniform state. A total of 18 additions were made. The time taken from the point of liquefaction initiation through to completion of the 18th addition was 120 minutes. At this point, the kneaded mixture was in a paste-like form. Subsequently, a further 640 parts of ion-exchanged water was added over 10 separate addition repetitions, thereby yielding a cyan aqueous pigment mixed solution 2. The 90% volume average particle diameter of the thus obtained aqueous pigment mixed solution was 226 nm, the volume average particle diameter was 132 nm, and the solid fraction concentration was 37 mass%.

Diethylene glycol and ion-exchanged water were then added to the obtained cyan aqueous pigment mixed solution, and the mixture was dispersed with a beads mill using the same conditions as those described for Example 1.
1,800 parts of the cyan aqueous pigment mixed solution 2
195 parts of diethylene glycol
1,196 parts of ion-exchanged water
Following circulatory treatment under the above conditions for 0.1 hours, the liquid passing through the beads mill was recovered. The recovered dispersed liquid was then subjected to a centrifugal separation in the same manner as that described for Example 1, yielding a cyan aqueous pigment liquid dispersion with a volume average particle diameter of 108 nm and a pigment concentration of 15 mass%. When the dispersion stability of the cyan aqueous pigment liquid dispersion was measured in the same manner as Example 1, the volume average particle diameter after leaving at high temperature was 105 nm.
Using the cyan aqueous pigment liquid dispersion, a cyan ink for ink-jet recording was prepared with the ink formulation shown below.
147 parts of the cyan aqueous pigment liquid dispersion 2
80 parts of 2-pyrrolidinone
80 parts of triethylene glycol monobutyl ether
30 parts of glycerol
5 parts of SURFYNOL 440 (manufactured by Air Products and Chemicals Inc.)
658 parts of ion-exchanged water
The viscosity of the cyan ink was 2.0 mPa·s, and the volume average particle diameter was 101 nm.
The cyan ink was sealed inside a silicate glass collection vial and left to stand for 6 weeks at 60°C. The viscosity after this leaving period was 2.1 mPa·s, and the volume average particle diameter was 105 nm.
40 g of the cyan ink 2 was placed in the black cartridge of a commercially available ink-jet printer EM-930C (manufactured by Seiko Epson Corporation), and printing was conducted. Solid printing was conducted at A4 size until the ink was completely consumed, and favorable printing properties were obtained, with no patchy ink coverage.

### (Reference Example 3)

### Black Dispersion using a Carbon Black Pigment

A mixture with the composition shown below was kneaded using the same apparatus and the same conditions as those described for Example 1 and Comparative Example 1.
150 parts of the styrene-acrylic acid copolymer A (acid number: 153 mgKOH/g)
500 parts of Mitsubishi Carbon Black #960
(manufactured by Mitsubishi Chemical Corporation)
67.5 parts of a 34 mass% aqueous solution of potassium hydroxide
(neutralization ratio: 100%)
340 parts of diethylene glycol
The raw materials were combined and kneading was started, and the maximum electrical current value at this point was 18 A. Two hours after commencing kneading, liquefaction was conducted by adding ion-exchanged water in portions of 20 parts per addition, in the same manner as the liquefaction step used in Comparative Example 1. The interval between the additions of ion-exchanged water was set to the time taken for the added ion-exchanged water to spread through the entire kneaded mixture to form a uniform state. A total of 18 additions were made. The time taken from the point of liquefaction initiation through to completion of the 18th addition was 160 minutes. At this point, the kneaded mixture was in a paste-like form. Subsequently, a further 840 parts of ion-exchanged water was added over 14 separate addition repetitions, thereby yielding a black aqueous pigment mixed solution 3. The 90% volume average particle diameter of the thus obtained aqueous pigment mixed solution was 120 nm, the volume average particle diameter was 75 nm, and the solid fraction concentration was 30 mass%.

Diethylene glycol and ion-exchanged water were then added to the obtained black aqueous pigment mixed solution, and the mixture was dispersed with a beads mill using the same conditions as those described for Example 1.
2,000 parts of the black aqueous pigment mixed solution
165 parts of diethylene glycol
805 parts of ion-exchanged water
Following circulatory treatment under the above conditions for 1.25 hours, the liquid passing through the beads mill was recovered. The recovered dispersed liquid was then subjected to a centrifugal separation in the same manner as that described for Example 1, yielding a black aqueous pigment liquid dispersion 3a with an average particle diameter of 69 nm and a pigment concentration of 15 mass%. When the black aqueous pigment liquid dispersion 3a was subjected to a dispersion stability test in the same manner as Example 1, the volume average particle diameter after leaving at high temperature was 72 nm.
Using the black aqueous pigment liquid dispersion, a black ink 3 for ink-jet recording was prepared with the ink formulation shown below.
126 parts of the black aqueous pigment liquid dispersion 3a
80 parts of 2-pyrrolidinone
80 parts of triethylene glycol monobutyl ether
30 parts of glycerol
5 parts of SURFYNOL 440 (manufactured by Air Products and Chemicals Inc.)
679 parts of ion-exchanged water
The viscosity of the black ink was 2.1 mPa·s, and the volume average particle diameter was 60 nm. The black ink was sealed inside a silicate glass collection vial and left to stand for 6 weeks at 60°C. The viscosity following this leaving period was 2.1 mPa·s, and the volume average particle diameter was 64 nm.
40 g of the black ink was placed in the black cartridge of a commercially available ink-jet printer EM-930C (manufactured by Seiko Epson Corporation), and printing was conducted. Solid printing was conducted at A4 size until the ink was completely consumed, and favorable printing properties were obtained, with no patchy ink coverage.

As described above, for the magenta quinacridone-based pigment, the cyan phthalocyanine-based pigment, and the black carbon black pigment, favorable liquefaction can be achieved during the liquefaction step of the solid kneaded mixture, which contains the pigment, the styrene-acrylic acid copolymer (b), the basic compound (c) and the wetting agent (d1), simply by adding water, and this enables the formation of a uniform fluid substance that is suitable for the dispersion step. By subsequently conducting the dispersion step, an aqueous pigment liquid dispersion with extremely favorable dispersion stability can be prepared. Accordingly, it is evident that the process for producing an aqueous pigment liquid dispersion according to the present invention exhibits particularly marked effects for yellow azo-type pigments.
By employing the production process of the present invention as a process for producing a yellow aqueous pigment liquid dispersion that uses a pigment (a) containing mainly an azo-type pigment, an aqueous pigment liquid dispersion with a favorable level of dispersion stability that is similar to that observed for the other basic colors can be prepared, even if the same styrene-acrylic acid copolymer (b) is used as the dispersant resin, meaning a favorable ink set can be formed. The production process of the present invention enables the kneaded mixture to be dispersed within a comparatively short period of time. The aqueous pigment liquid dispersion obtained using the production process of the present invention is able to maintain a stable dispersion state over an extended period, even when used as an ink-jet recording ink, and also exhibits favorable recording properties when mounted in a printer.

## Claims

1. A process for producing an aqueous pigment liquid dispersion that is formed by mixing a solid kneaded mixture comprising a pigment (a) containing an azo-type pigment, a styrene-acrylic acid copolymer (b), a basic compound (c) and a wetting agent (d1) with an aqueous medium,
said process comprising a kneading step of preparing the solid kneaded mixture and a liquefaction step of adding water (e) and a wetting agent (d2) while continuing kneading of the mixture, thereby generating a liquid state, wherein
a total quantity of the wetting agent (d2) added in the liquefaction step is within a range from 0.5 to 40 mass% of the solid kneaded mixture at a point of initiation of the liquefaction step.

2. A process for producing an aqueous pigment liquid dispersion according to claim 1, wherein the wetting agent (d2) is added to the solid kneaded mixture from an initial stage of said liquefaction step.

3. A process for producing an aqueous pigment liquid dispersion according to claim 1, wherein the basic compound (c) is an alkali metal hydroxide.

4. A process for producing an aqueous pigment liquid dispersion according to any one of claims 1 to 3, wherein the wetting agent (d1) within the solid kneaded mixture and the wetting agent (d2) added in the liquefaction step are identical.

5. A process for producing an aqueous pigment liquid dispersion according to any one of claims 1 to 3, wherein said wetting agent (d2) is a polyhydric alcohol.

6. A process for producing an aqueous pigment liquid dispersion according to claim 5, wherein the polyhydric alcohol is diethylene glycol.

7. A process for producing an aqueous pigment liquid dispersion according to any one of claims 1 to 3, wherein the azo-type pigment is C.I. Pigment Yellow 155.

8. A process for producing an aqueous pigment dispersion according to any one of claims 1 to 3, wherein
the styrene-acrylic acid copolymer (b) is a resin having an acid number within a range from 50 to 300 and a weight average molecular weight within a range from 7,500 to 50,000,
said resin comprising a styrene-based monomer unit, an acrylic acid monomer unit and a methacrylic acid monomer unit, and comprising the styrene-based monomer unit at 60 to 90 mass% relative to a combined total of all monomer components.

9. A process for producing an aqueous pigment liquid dispersion according to claim 8, wherein a combined total of the styrene-based monomer unit, the acrylic acid monomer unit and the methacrylic acid monomer unit is at least 95 mass% of a combined total of all monomer components.

10. A process for producing an aqueous pigment liquid dispersion according to any one of claims 1 to 3, wherein a glass transition point of the styrene-acrylic acid copolymer (b) is at least 90°C.

11. A process for producing an aqueous pigment liquid dispersion according to any one of claims 1 to 3, wherein
a quantity of the basic compound (c) within the kneaded mixture is sufficient that a neutralization ratio of an acid number of the styrene-acrylic acid copolymer is at least 50%, and
a pH of the aqueous pigment liquid dispersion is within a range from 8 to 11.

12. A process for producing an aqueous pigment liquid dispersion according to any one of claims 1 to 3, wherein a solid content ratio of the kneaded mixture is within a range from 50 to 80 mass%.

13. A process for producing an aqueous pigment liquid dispersion according to any one of claims 1 to 3, wherein a mass ratio (b) / (a) within the kneaded mixture between the styrene-acrylic acid copolymer (b) and the pigment (a) containing mainly the azo-type pigment is within a range from 1/10 to 2/1.

14. An ink-jet recording ink comprising, as a main component, an aqueous pigment liquid dispersion produced using the process for producing an aqueous pigment liquid dispersion according to any one of claims 1 to 3.

## Patentansprüche

1. Verfahren zur Herstellung einer wässrigen Pigmentflüssigdispersion, die gebildet wird durch Vermischen eines festen verkneteten Gemisches, umfassend ein Pigment (a), enthaltend ein Azo-Typ-Pigment, ein Styrol-Acrylsäure-Copolymer (b), eine basische Verbindung (c) und ein Benetzungsmittel (d1), mit einem wässrigen Medium,
wobei das Verfahren umfasst: einen Verknetschritt der Herstellung des festen verkneteten Gemisches und einen Verflüssigungsschritt der Zugabe von Wasser (e) und eines Benetzungsmittels (d2) bei kontinuierlichem Verkneten des Gemisches, wodurch ein flüssiger Zustand erzeugt wird, wobei
die Gesamtmenge des Benetzungsmittels (d2), die bei dem Verflüssigungsschritt zugegeben wird, im Bereich von 0,5 bis 40 Masse-% des festen verkneteten Gemisches zum Zeitpunkt des Beginns des Verflüssigungsschrittes liegt.

2. Verfahren zur Herstellung einer wässrigen Pigmentflüssigdispersion nach Anspruch 1, wobei das Benetzungsmittel (d2) von dem Anfangsstadium des Verflüssigungsschritts an zu dem festen verkneteten Gemisch zugegeben wird.

3. Verfahren zur Herstellung einer wässrigen Pigmentflüssigdispersion nach Anspruch 1, wobei die basische Verbindung (c) ein Alkalimetallhydroxid ist.

4. Verfahren zur Herstellung einer wässrigen Pigmentflüssigdispersion nach einem der Ansprüche 1 bis 3, wobei das Benetzungsmittel (d1) in dem festen verkneteten Gemisch und das Benetzungsmittel (d2), das in dem Verflüssigungsschritt zugegeben wird, identisch sind.

5. Verfahren zur Herstellung einer wässrigen Pigmentflüssigdispersion nach einem der Ansprüche 1 bis 3, wobei das Benetzungsmittel (d2) ein mehrwertiger Alkohol ist.

6. Verfahren zur Herstellung einer wässrigen Pigmentflüssigdispersion nach Anspruch 5, wobei der mehrwertige Alkohol Diethylenglycol ist.

7. Verfahren zur Herstellung einer wässrigen Pigmentflüssigdispersion nach einem der Ansprüche 1 bis 3, wobei das Azo-Typ-Pigment C.I. Pigment Yellow 155 ist.

8. Verfahren zur Herstellung einer wässrigen Pigmentflüssigdispersion nach einem der Ansprüche 1 bis 3, wobei
das Styrol-Acrylsäure-Copolymer (b) ein Harz mit einer Säurezahl im Bereich von 50 bis 300 und einem gewichtsmittleren Molekulargewicht im Bereich von 7.500 bis 50.000 ist,
wobei das Harz eine Styrol-basierte Monomereinheit, eine Acrylsäuremonomereinheit und eine Methacrylsäuremonomereinheit umfasst und die Styrol-basierte Monomereinheit zu 60 bis 90 Masse-%, bezogen auf die kombinierte Gesamtheit aller Monomerkomponenten, enthält.

9. Verfahren zur Herstellung einer wässrigen Pigmentflüssigdispersion nach Anspruch 8, wobei die kombinierte Gesamtheit der Styrol-basierten Monomereinheit, der Acrylsäuremonomereinheit und der Methacrylsäuremonomereinheit mindestens 95 Masse-% der kombinierten Gesamtheit aller Monomerkomponenten ausmacht.

10. Verfahren zur Herstellung einer wässrigen Pigmentflüssigdispersion nach einem der Ansprüche 1 bis 3, wobei der Glasübergangspunkt des Styrol-Acrylsäure-Copolymers (b) mindestens 90°C ist.

11. Verfahren zur Herstellung einer wässrigen Pigmentflüssigdispersion nach einem der Ansprüche 1 bis 3, wobei
die Menge der basischen Verbindung (c) in dem verkneteten Gemisch ausreichend ist, dass das Neutralisationsverhältnis der Säurezahl des Styrol-Acrylsäure-Copolymers mindestens 50% ist und
der pH-Wert der wässrigen Pigmentflüssigdispersion im Bereich von 8 bis 11 liegt.

12. Verfahren zur Herstellung einer wässrigen Pigmentflüssigdispersion nach einem der Ansprüche 1 bis 3, wobei das Feststoffgehaltverhältnis des verkneteten Gemisches im Bereich von 50 bis 80 Masse-% liegt.

13. Verfahren zur Herstellung einer wässrigen Pigmentflüssigdispersion nach einem der Ansprüche 1 bis 3, wobei das Masseverhältnis (b)/(a) in dem verkneteten Gemisch zwischen dem Styrol-Acrylsäure-Copolymer (b) und dem Pigment (a), das hauptsächlich das Azo-Typ-Pigment enthält, im Bereich von 1/10 zu 2/1 liegt.

14. Tintenstrahlaufzeichnungstinte, umfassend, als Hauptkomponente, eine wässrige Pigmentflüssigdispersion, hergestellt unter Verwendung des Verfahrens zur Herstellung einer wässrigen Pigmentflüssigdispersion nach einem der Ansprüche 1 bis 3.

## Revendications

1. Procédé de production d'une dispersion liquide de pigment aqueux qui est formée en mélangeant un mélange malaxé solide comprenant un pigment (a) contenant un pigment de type azoïque, un copolymère de styrène-acide acrylique (b), un composé basique (c) et un agent mouillant (d1) avec un milieu aqueux,
ledit procédé comprenant une étape de malaxage consistant à préparer le mélange malaxé solide et une étape de liquéfaction consistant à ajouter de l'eau (e) et un agent mouillant (d2) tout en continuant à malaxer le mélange, générant ainsi un état liquide, dans lequel
une quantité totale de l'agent mouillant (d2) ajoutée dans l'étape de liquéfaction se trouve dans une plage de 0,5 à 40 % en masse du mélange malaxé solide à un point de démarrage de l'étape de liquéfaction.

2. Procédé de production d'une dispersion liquide de pigment aqueux selon la revendication 1, dans lequel l'agent mouillant (d2) est ajouté au mélange malaxé solide à partir d'un stade initial de ladite étape de liquéfaction.

3. Procédé de production d'une dispersion liquide de pigment aqueux selon la revendication 1, dans lequel le composé basique (c) est un hydroxyde de métal alcalin.

4. Procédé de production d'une dispersion liquide de pigment aqueux selon l'une quelconque des revendications 1 à 3, dans lequel l'agent mouillant (d1) à l'intérieur dudit mélange malaxé solide et l'agent mouillant (d2) ajouté dans l'étape de liquéfaction sont identiques.

5. Procédé de production d'une dispersion liquide de pigment aqueux selon l'une quelconque des revendications 1 à 3, dans lequel ledit agent mouillant (d2) est un alcool polyhydrique.

6. Procédé de production d'une dispersion liquide de pigment aqueux selon la revendication 5, dans lequel l'alcool polyhydrique est du diéthylène glycol.

7. Procédé de production d'une dispersion liquide de pigment aqueuse selon l'une quelconque des revendications 1 à 3, dans lequel le pigment de type azoïque est un pigment C.I. Jaune 155.

8. Procédé de production d'une dispersion de pigment aqueux selon l'une quelconque des revendications 1 à 3, dans lequel
le copolymère de styrène-acide acrylique (b) est une résine ayant un indice d'acidité dans une plage de 50 à 300 et une masse moléculaire moyenne en poids dans une plage de 7500 à 50 000,
ladite résine comprenant une unité monomère à base de styrène, une unité monomère d'acide acrylique et une unité monomère d'acide méthacrylique, et comprenant l'unité monomère à base de styrène à 60 à 90 % en masse, par rapport à un total combiné de l'ensemble des composants monomères.

9. Procédé de production d'une dispersion liquide de pigment aqueux selon la revendication 8, dans lequel un total combiné de l'unité monomère à base de styrène, de l'unité monomère d'acide acrylique et de l'unité monomère d'acide méthacrylique est au moins de 95 % en masse d'un total combiné de l'ensemble des composants monomères.

10. Procédé de production d'une dispersion liquide de pigment aqueux selon l'une quelconque des revendications 1 à 3, dans lequel un point de transition vitreuse du copolymère de styrène-acide acrylique (b) est d'au moins 90°C.

11. Procédé de production d'une dispersion liquide de pigment aqueux selon l'une quelconque des revendications 1 à 3, dans lequel
une quantité du composé basique (c) à l'intérieur du mélange malaxé est suffisante si un rapport de neutralisation d'un indice d'acidité du copolymère de styrène-acide acrylique est d'au moins 50 %, et
un pH de la dispersion liquide de pigment aqueux se trouve dans une plage de 8 à 11.

12. Procédé de production d'une dispersion liquide de pigment aqueux selon l'une quelconque des revendications 1 à 3, dans lequel un rapport en teneur de solide du mélange malaxé se trouve dans une plage de 50 à 80 % en masse.

13. Procédé de production d'une dispersion liquide de pigment aqueux selon l'une quelconque des revendications 1 à 3, dans lequel un rapport en masse (b)/(a) à l'intérieur du mélange malaxé entre le copolymère de styrène/acide acrylique (b) et le pigment (a) contenant principalement le pigment de type azoïque se trouve dans une plage de 1/10 à 2/1.

14. Encre pour impression à jet d'encre comprenant, comme composant principal, une dispersion liquide de pigment aqueux produite à l'aide du procédé de production d'une dispersion liquide de pigment aqueux selon l'une quelconque des revendications 1 à 3.
